# EUROPÄISCHE PATENTSCHRIFT

(11) **EP 2 721 309 B1**
(45) Veröffentlichungstag und Bekanntmachung des Hinweises auf die Patenterteilung: **03.10.2018**
(21) Anmeldenummer: 12728180.6
(22) Anmeldetag: 12.06.2012
(51) Int. Cl.: F16B 5/07

(54) **BEFESTIGUNGSSYSTEM**
FASTENING SYSTEM
SYSTÈME DE FIXATION

(30) Priorität: 18.06.2011 DE 102011104886
(43) Veröffentlichungstag der Anmeldung: 23.04.2014
(73) Patentinhaber: Gottlieb Binder GmbH & Co. KG, 71084 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2012/002481
(87) Internationale Veröffentlichungsnummer: WO 2012/175173

(56) Entgegenhaltungen:
- WO-A1-2009/097950
- DE-A1-102008 013 890
- GB-A- 2 364 351
- US-A- 5 110 649

## Beschreibung

Die Erfindung betrifft ein Befestigungssystem zum wieder lösbaren Anbringen von Abdeckbauteilen, wie Paneelen, an Drittbauteilen, wie Karosserieteilen, mit mindestens einem einen Distanzkörper mit unterschiedlich vorgebbaren Bauhöhen aufweisenden Abstandhalter, der an seiner einen Seite mittels eines Befestigungsmittels an dem Abdeckbauteil festlegbar ist und der auf seiner gegenüberliegenden Seite mit einem Haftverschlussteil versehen ist, das mit einem korrespondierenden Haftverschlussteil wieder lösbar in Eingriff bringbar ist, das an dem Drittbauteil festlegbar ist.

Ein dem Stand der Technik entsprechendes Befestigungssystem dieser Art ist in WO 2009/097950 A1 aufgezeigt. Solche Befestigungssysteme dienen unter anderem dazu, flächenartige Verkleidungen an vorgebbaren Stellen festzulegen, beispielsweise um unschön aussehende Stellen zu kaschieren; sie können aber auch zur Wärme- und Schallisolation eingesetzt werden. So werden im Kraftfahrzeugbau beispielsweise paneelartige Abdeckbauteile eingesetzt, um Blechteile als Karosseriebauteile großflächig abzudecken. Als Karosseriebauteile können hier beispielsweise Beladetüren angesprochen sein, aber auch Karosserieböden und -decken. Neben dem angesprochenen Kraftfahrzeugbereich sind solche Befestigungssysteme auch einsetzbar bei Eisenbahnen, Schiffen und Flugzeugen, wo vergleichbare Aufgabenstellungen zu lösen sind.

Dadurch, dass das Befestigungssystem eine wieder lösbare Verbindung zwischen Abdeckbauteil und einem Drittbauteil ermöglicht, lassen sich beispielsweise innerhalb des Drittbauteils verlaufende technische Einrichtungen, wie Kabel, Klimakanäle, Steuerelektroniken etc., bei Bedarf gut zugänglich gestalten, indem man das Abdeckbauteil von dem Drittbauteil mit der jeweils technischen Einrichtung entfernt, indem man die Haftverschlussteile miteinander außer Eingriff bringt, d.h. die Haftverschlussverbindung löst. Des Weiteren ist bei der bekannten Lösung der bevorzugt als Kastenteil konzipierte Distanzkörper des Befestigungssystems als Bestandteil des Abstandhalters im Bedarfsfall in der Bauhöhe unterschiedlich ausgestaltet, um gewünschte unterschiedliche große Abstände zwischen Abdeckbauteil und Drittbauteil realisieren zu können. In dem Bestreben, eine sichere Befestigung der Abdeckbauteile zu gewährleisten, sind heutige Haftverschlüsse auf hohe Haltekräfte ausgelegt. Während dies die erforderliche Zuverlässigkeit der Befestigung sicherstellt, besteht jedoch die Gefahr, dass wegen der hohen Haltekräfte Schwierigkeiten bei einer Entfernung der Bauteile auftreten. In ungünstigen Fällen kann es hierbei zu einem Ablösen des Distanzkörpers vom Abdeckbauteil kommen, wenn die Haltekräfte der in Eingriff stehenden Haftverschlussteile stärker sind als die zwischen dem Befestigungsmittel des Distanzkörpers und dem Abdeckbauteil wirksame Haltekraft.

Durch die US 5 110 649 A ist ein weiteres Befestigungssystem bekannt mit einem Haftverschlussteil, das vorstehende Verschlusshaken aufweist, die im Einbauzustand des Systems in einem geschäumten Polsterteil unter Bildung eines mehrfach wiederlösbaren Verschlusses mit Flauschelementen als weiterem Haftverschlussteil eines Drittbauteils, hier beispielsweise in Form von Polsterbezugmaterialien oder sonstigen weiteren Polsterteilen in Eingriff bringbar sind. Das bekannte System bildet einen Mehrlagenverbund bestehend aus einem Haftverschlussteil aus, dessen flächige, den Verschlusshaken abgewandte Rückseite ein flächiges Schaumteil aufweist, das randseitig über die Rückseite des Haftverschlussteiles vorsteht, wobei ein flaches Gitter mit wiederum demgegenüber vorstehendem Außenrand sich an das flächige Schaumteil mit der Maßgabe anschließt, dass zwischen Gitter und Schaumteil eine metallische Lage eingesetzt ist, die als Komponente einer Magnetbefestigungs- und Montageeinrichtung dazu dient, das System an eine Schaumform festzulegen, die den Festlegemagneten für die metallische Lage aufweist.

Die Einzellagen des Mehrlagenverbundes werden unter Einsatz üblicher Klebstoffmittel aneinander gehalten, was die Herstellung des bekannten Systems aufwendig und damit auch teuer macht. Während des Einschäumvorganges tritt Schaummaterial durch das weitmaschige Gitter des Systems, das sich dann mit der Schaumteil-Lage des Haftverschlussteiles verbinden soll, das zum einen die Randabdichtung des Systems innerhalb der Einschäumform gewährleistet, um dergestalt die Verschlusshaken zwecks Erhalt ihrer Funktion von Schaummaterial freizuhalten und zum anderen aufgrund seiner Porosität eine gute Anbindung an das Schaummaterial erlaubt, was durch die zusätzliche Anbindung an das Schaummaterial über das Gitter mit unterstützt wird.

Aufgrund des Mehrlagenaufbaus baut die bekannte Systemlösung in ihrer Einbaulage in der Schäumform groß auf, was ihren Einsatz für moderne, dünnpolstrige Sitzbauteile und deren Komponente dem Grunde nach fraglich erscheinen lässt und insbesondere erlaubt der bekannte Systemaufbau keine variable Anpassung an unterschiedliche Einbauhöhen, die vom Einsatzzweck vorgegeben werden, so dass die bekannte Lösung für das wiederlösbare Anbringen von Abdeckbauteilen, wie Paneelen an Drittbauteilen, wie Karosserieteilen wenig geeignet ist.

Durch die GB 2 364 351 A ist insoweit ein gattungsfremdes Befestigungssystem bekannt, als dass das als Distanzkörper des Abstandhalters fungierende Kastenteil, das das jeweilige Haftverschlussteil randseitig umfasst bei allen Ausführungsformen eine konstante Bauhöhe aufweist, die sich an Überstandshöhen der einzelnen Verschlusselemente gegenüber einem Trägerteil orientiert, das regelmäßig einstückiger Bestandteil des Kastenteils ist. Eine Bauhöhenanpassung über eine geeignete Wahl der Höhe des Kastenteils, respektive des Distanzkörpers ist nicht vorgesehen.

Soweit das bekannte Befestigungssystem für nicht in der Bauhöhe vorgegebene Einsatzzwecke anpassbare Distanzkörper lehrt, die einstückig mit dem Trägerteil verbunden sind, dass gemäß der Ausgestaltung nach der Figur 24 einen randförmigen Überstand gegenüber dem kastenförmigen Distanzkörper aufweist und für eine verbesserte Schaumanbindung bohrungsartige Durchgriffsöffnungen aufweist, ist dennoch nicht ausgeschlossen, dass beim Öffnen und Schließen des Haftverschlusses mit seinen Haftverschlussteilen der Distanzkörper mit seinem Trägerteil aus dem Schaummaterial aufgrund der hieraus resultierenden geringen Materialanbindung ungewollt sich lösen kann.

Im Hinblick auf diese Problematik liegt der Erfindung die Aufgabe zugrunde, ein Befestigungssystem der betrachteten Art zur Verfügung zu stellen, das trotz hoher an den Haftverschlussteilen wirksamer Haltekräfte ein sicheres Abnehmen der Abdeckbauteile ermöglicht.

Diese Aufgabe löst erfindungsgemäß ein Befestigungssystem, das die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass sich an zumindest einem Rand der mit dem Abdeckbauteil zu verbindenden Seite des Distanzkörpers ein flaches Gitter anschließt, das den Verbindungsbereich zwischen Abdeckbauteil und Abstandhalter vergrößert. Während beim Stand der Technik lediglich die betreffende Grundfläche des Distanzkörpers für einen als Befestigungsmittel vorgesehenen Klebstoff zur Verfügung steht, eröffnet das Vorhandensein des sich an den Distanzkörper seitlich anschließenden Gitters zusätzliche Möglichkeiten, um einen sicheren Verbund mit dem Drittbauteil zu realisieren. Durch das Gitter vergrößert sich nicht nur die Verbindungsfläche an sich, sondern die Gitterstruktur mit ihren entsprechenden Gitteröffnungen ermöglicht auch im Vergleich zu einer Klebeverbindung zwischen glatten Flächen andere und wirkungsvollere Verbindungstechniken. So eignet sich das Gitter für ein Einlaminieren oder Einschäumen in ein Abdeckbauteil oder für ein Hinterspritzen, wobei formschlüssige Verbindungen zustande kommen. Bei Klebeverbindungen mit Klebstoffen auf Polyamidbasis oder mit Kunstkautschuk-Klebstoffen ergeben sich durch das Hindurchtreten des Klebstoffes durch die Gitteröffnungen ebenfalls formschlüssige Verbindungen. Dadurch ist die Haftverschlussverbindung bei Bedarf auf sichere Weise lösbar, ohne dass die Gefahr der Beeinträchtigung des jeweils zu befestigenden Bauteils besteht.

Eine weitere wesentliche Besonderheit der Erfindung gemäß dem kennzeichnenden Teil des Patentanspruches 1 besteht darin, dass das Gitter an dem Distanzkörper einstückig angeformt ist. Dabei kann es sich bei der sich hieraus ergebenden Einheit aus Distanzkörper und Gitter um einen homogenen Spritzling handeln oder um ein Kunststoffteil mit Einleger aus textilen Fasern oder Glasfaser oder Metallgewebe.

Vorzugsweise schließt sich das Gitter an sämtliche Ränder des rechteckförmigen Distanzkörpers an, so dass der Verbindungsbereich nach sämtlichen Seiten des Abstandhalters hin erweitert ist, wobei mit besonderem Vorteil die Abmessungen des Gitters so gewählt sind, dass das Gitter die Fläche des Verbindungsbereichs des Abstandhalters mit dem Abdeckbauteil auf mehr als das Doppelte der Fläche des Distanzkörpers vergrößert.

Hinsichtlich der Form des Gitters kann die Anordnung so getroffen sein, dass dieses an seinem Umfang eine stetige Krümmung aufweist, insbesondere kreisrund oder oval ist, oder dass das Gitter eine eckige Gestalt aufweist. Im letzteren Fall kann das Gitter auch so gestaltet sein, dass Eckwinkel vorhanden sind, von denen einige nach außen und einige nach innen geöffnet sind, so dass ein Gitter mit mehreren, voneinander getrennten Armen gebildet ist.

Unabhängig von der jeweiligen Umrissform des Gitters kann der Distanzkörper im Zentralbereich des durch das Gitter gebildeten Verbindungsbereichs oder außerhalb des Zentralbereichs gelegen sein.

Hinsichtlich der eigentlichen Gitterstruktur kann die Anordnung vorteilhaft so getroffen sein, dass das Gitter durch zwei sich kreuzende Gruppen aus zueinander parallel verlaufenden Gitterstäben gebildet ist. Die Gruppen der Gitterstäbe können sich hierbei im rechten Winkel kreuzen, so dass rechteckförmige Gitteröffnungen gebildet sind.

Bei vorteilhaften Ausführungsformen kann die Anordnung auch so getroffen sein, dass der Distanzkörper an der mit dem Abdeckbauteil zu verbindenden Seite eine vorstehende ebene Randeinfassung aufweist, an die sich das Gitter koplanar anschließt. Dadurch ist, zusätzlich zur ebenen Grundfläche des Distanzkörpers eine diese vergrößernde, ebene Anlagefläche für das Abdeckbauteil gebildet.

Nachstehend ist die Erfindung anhand von in der Zeichnung dargestellten Ausführungsbeispielen im Einzelnen erläutert.
Es zeigen:
- Fig.1: in der Art einer Explosionszeichnung die wesentlichen Teile einer Ausführungsform des Befestigungssystems;
- Fig.2: eine perspektivische Schrägansicht lediglich des Abstandhalters und eines zugeordneten Haftverschlussteils einer abgewandelten Ausführungsform des Befestigungssystems;
- Fig.3: eine perspektivische Schrägansicht lediglich des Abstandhalters einer weiteren Ausführungsform;
- Fig.4 bis 8: in der Art vereinfachter Schemaskizzen eine Auswahl verschiedener Formen des Abstandhalters für Ausführungsbeispiele des Befestigungssystems;
- Fig.9: eine Draufsicht des Abstandhalters einer weiteren Ausführungsform des Befestigungssystems;
- Fig.10: eine Schnittdarstellung entsprechend der Schnittlinie X - X von Fig.9;
- Fig.11: eine gegenüber Fig. 9 und 10 in größerem Maßstab gezeichnete Draufsicht des Abstandhalters, wobei jedoch das Haftverschlussteil vom Kastenteil des Distanzkörpers abgenommen ist, und
- Fig.12: das vom Kastenteil von Fig.11 abgenommene Haftverschlussteil mit Blick auf die Unterseite von dessen Trägerteil.

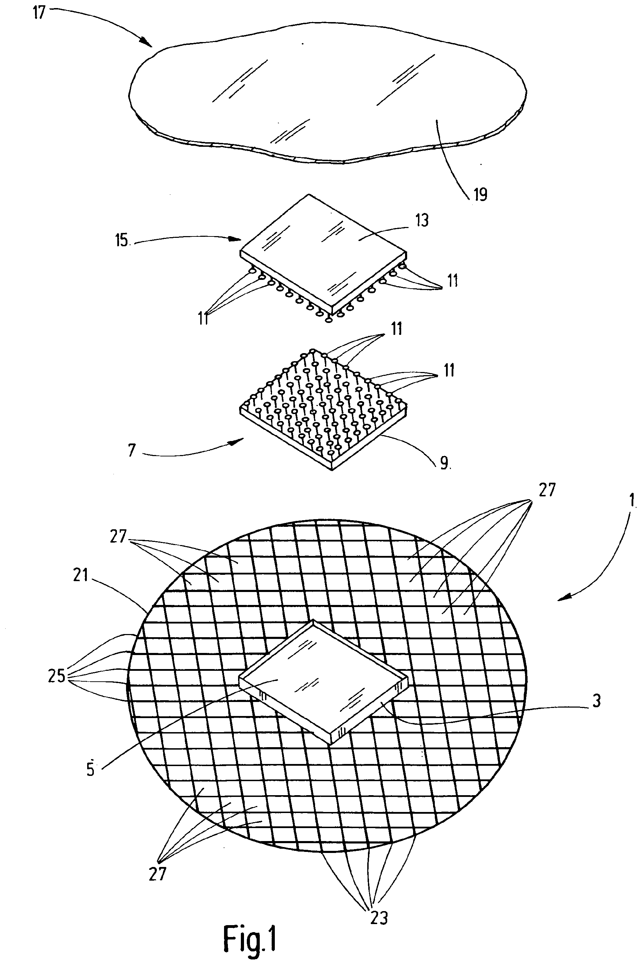

Die Fig.1 zeigt Einzelkomponenten des als Ganzes aus diesen Komponenten aufgebauten Befestigungssystems, beginnend mit einem in Fig.1 untenliegend dargestellten Abstandhalter 1, der über ein Befestigungsmittel an einem nicht dargestellten Abdeckbauteil befestigbar ist. Der Abstandhalter 1 weist als eigentlichen Distanzkörper ein rechteckförmiges Kastenteil 3 mit einer Rahmenvertiefung 5 zur bündigen Aufnahme eines ersten Haftverschlussteils 7 auf, das an einer Trägerlage 9 pilzkopfartige Verhakungselemente 11 aufweist. Diese sind mit korrespondierenden Verhakungselementen 11 an einem zweiten Haftverschlussteil 15 verhakbar, dessen Trägerlage 13 an dem betreffenden Drittbauteil 17 befestigt ist, von dem in Fig.1 ein Flächenabschnitt eines Karosseriebleches 19 beispielhaft angedeutet ist. Wie beim Stand der Technik lässt sich das Kastenteil 3 des Abstandhalters 1 in der Bauhöhe unterschiedlich ausgestalten, um gewünschte, unterschiedlich große Abstände zwischen Abdeckbauteil und Drittbauteil 17 zu realisieren.

Als Befestigungsmittel zur Festlegung des Abstandhalters 1 am (nicht gezeigten) Abdeckbauteil ist beim erfindungsgemäßes Befestigungssystem ein flaches Gitter 21 vorgesehen, das sich an das Kastenteil 3 an der dem Abdeckbauteil zugewandten Seite anschließt und den Verbindungsbereich mit dem Abdeckbauteil über den Flächenbereich des Kastenteils 3 hinaus vergrößert. Bei dem Ausführungsbeispiel von Fig.1 ist das Gitter 21 kreisrund und umgibt das Kastenteil 3 in der Weise, dass dieses im Bereich des Kreiszentrums gelegen ist. Das Gitter 21 ist aus zwei Gruppen von Gitterstäben 23 und 25 gebildet, die sich rechtwinklig oder näherungsweise rechtwinklig kreuzen, so dass rechteckförmige Gitteröffnungen 27 gebildet sind, die ebenso wie die Gitterstäbe 23 und 25 (in den Zeichnungen nicht sämtliche beziffert) sind. Das Gitter 21 ist verhältnismäßig fein ausgebildet, so dass die Anzahl der Gitteröffnungen 27 fünfzig Öffnungen oder weit mehr als fünfzig Öffnungen beträgt. Eine derartige Gitterstruktur ist besonders gut geeignet für eine Verbindung mit dem Abdeckbauteil mittels Einlaminieren, Einschäumen oder Hinterspritzen. Auch können Klebstoffe benutzt werden. In jedem Falle ergibt sich eine formschlüssige Verankerung durch das die Gitteröffnungen 27 durchsetzende Material oder den Klebstoff. Es können auch hochtemperaturbeständige Hotmelt-Klebstoffe zum Einsatz kommen, wie Polyamid-Klebstoffe. Besonders bevorzugt ist das Kastenteil 3 aus ABS-Werkstoff aufgebaut, insbesondere aus PC-ABS-Werkstoff (Polycarbonat-Acryl-Nitril-Butadien-Styrol-Werkstoff). Der gesamte Abstandhalter 1 mit Kastenteil 3 und Gitter 21 kann als einstückiger Spritzling aus Kunststoffmaterial gebildet sein, beispielsweise aus Polyamid-6-Material. Anstelle eines homogenen Spritzlinges kann dieser auch mit einer Einlage versehen sein, etwa mit textilem Fasermaterial, Glasfasermaterial oder Metallgewebe.

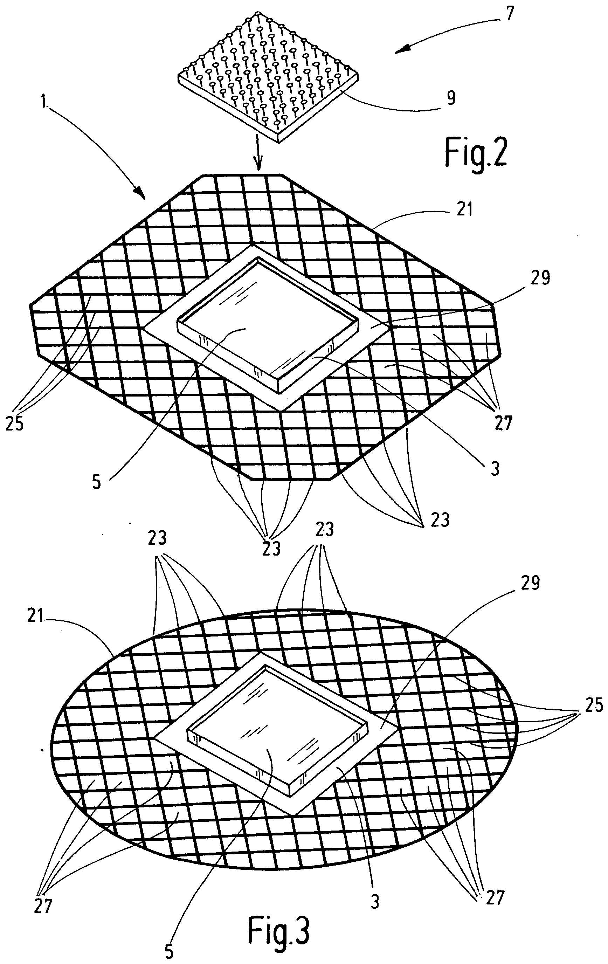

Die Fig.2 verdeutlicht eine abgewandelte Ausführungsform. Diese unterscheidet sich vom ersten Beispiel dadurch, dass das Gitter 21 eine Rechteckform mit abgeflachten Ecken besitzt. Wie beim ersten Ausführungsbeispiel ist das Kastenteil 3 innerhalb des durch das Gitter 21 gebildeten Verbindungsbereiches zentral gelegen. Ein weiterer Unterschied besteht darin, dass das Kastenteil 3 eine größere Bauhöhe als beim ersten Beispiel besitzt. Ferner schließt sich das Gitter 21 an das Kastenteil 3 nicht unmittelbar an, sondern das Kastenteil 3 weist an der mit dem Abdeckbauteil zu verbindenden Seite eine vorstehende ebene Randeinfassung 29 auf. Wiederum ist der gesamte Abstandhalter 1, einschließlich Kastenteil 3, Randeinfassung 29 und Gitter 21 als einheitlicher Spritzling einstückig ausgebildet.

Bei dem Ausführungsbeispiel von Fig.3 besteht der Unterschied gegenüber dem Beispiel von Fig.2 lediglich darin, dass das Gitter 21 ovalförmig ist.

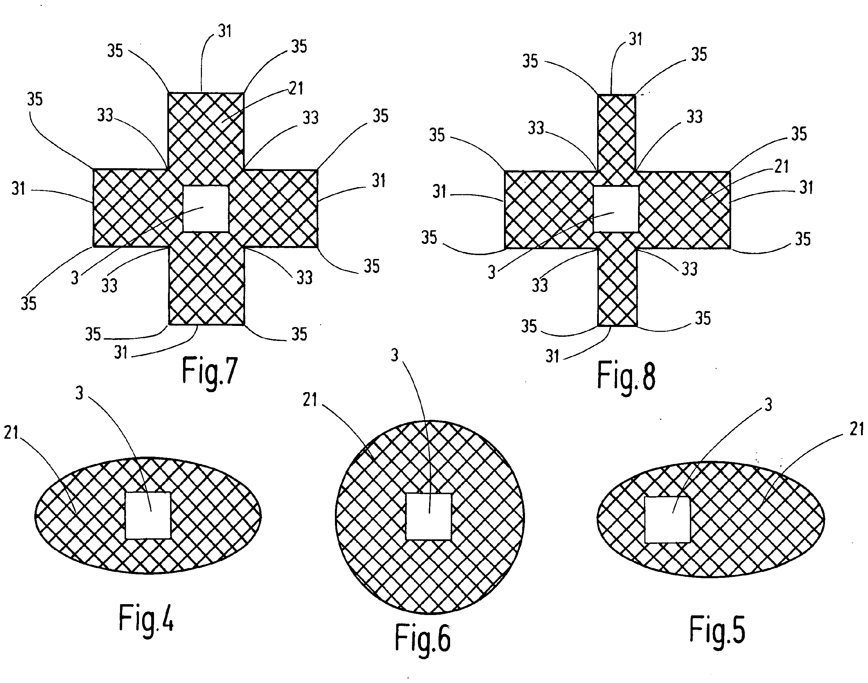

Um eine den Verbindungsbereich vergrößernde Gitterstruktur zur Verfügung zu stellen, kann das Gitter 21 verschiedenartige Umrissformen besitzen. Auch braucht das Kastenteil 3 nicht notwendigerweise im Zentralbereich des jeweiligen Gitters 21 gelegen zu sein, ebenso wie das Kastenteil 3 selbst keine quadratische Form (wie in den Figuren gezeigt) haben muss, sondern beispielsweise auch eine gestrecktere Rechteckform haben könnte. Die Fig.4 bis 8 verdeutlichen eine Auswahl möglicher Varianten der Gestaltung des Gitters 21. Die Fig.4 zeigt in Form einer vereinfachten schematischen Skizze für das Gitter 21 eine schlanke ovale Form mit im Zentralbereich gelegenem Kastenteil 3. Das Beispiel von Fig.5 unterscheidet sich demgegenüber lediglich durch eine dezentrale Lage des Kastenteils 3, während Fig.6, ähnlich wie die Fig.1, ein kreisrundes Gitter 21 mit im Zentralbereich liegendem Kastenteil 3 zeigt. Die Fig.7 und 8 schließlich zeigen Beispiele, bei denen sich von einem im Zentralbereich des Verbindungsbereichs liegenden Kastenteil 3 quadratischer Form, von jeder Seite des Quadrates ausgehend, ein Gitterbalken 31 erstreckt, die zueinander senkrecht verlaufen, so dass das Gitter 21 ein Balkenkreuz bildet, mit Eckwinkeln 33, die nach außen geöffnet sind, und mit Eckwinkeln 35, die nach innen geöffnet sind. Während beim Beispiel von Fig.7 die Balken 31 jeweils die gleiche Breite besitzen, unterscheidet sich das Beispiel von Fig.8 demgegenüber dadurch, dass die in der Figur vertikal verlaufenden Balken 31 schmäler als die horizontalen Balken 31 sind, wobei die Breite der schmäleren Balken 31 geringer ist als die Seitenlänge des Kastenteils 3.

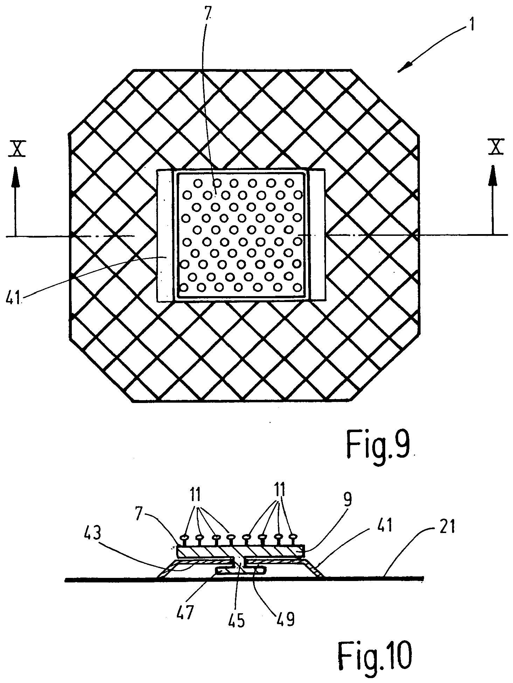

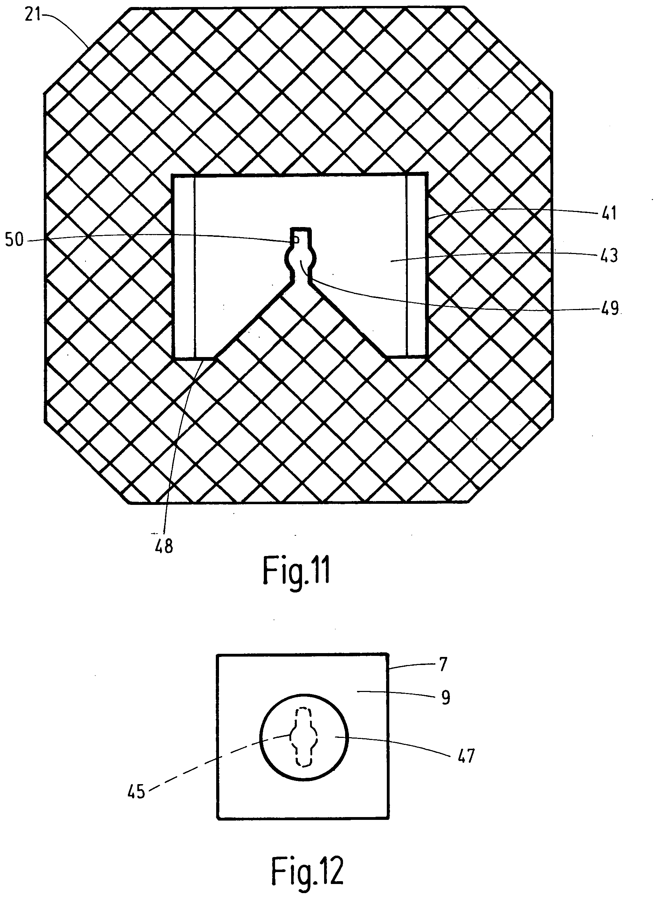

Bei einer weiteren Ausführungsform gemäß Fig.9 bis 12 hat das den Distanzkörper bildende Kastenteil 41 die Form eines trogartigen Hohlkastens, an dessen oberhalb des Gitters 21 befindlichem Boden 43, der keine Randeinfassung besitzt, die Trägerlage 9 des Haftverschlussteils 7 festlegbar ist. Hierfür weist die Trägerlage 9 eine vorspringende Haltenase 45 auf, die am freien Ende eine knopfartige Erweiterung 47 besitzt. Der Boden 43 des Kastenteils 41 weist einen Schlitz 49 auf, und das Kastenteil 41 ist an der Seite 48, zu der hin der Schlitz 49 offen ist, offen, so dass die Haltenase 45 in den Schlitz 49 einsteckbar ist, wobei die knopfartige Erweiterung 47 die Ränder 50 des Schlitzes 49 übergreift und so das Haftverschlussteil 7 formschlüssig am Kastenteil 41 festlegt.

## Patentansprüche

1. Befestigungssystem zum wieder lösbaren Anbringen von Abdeckbauteilen, wie Paneelen, an Drittbauteilen (17), wie Karosserieteilen (19), mit mindestens einem einen Distanzkörper (3) mit unterschiedlich vorgebbaren Bauhöhen aufweisenden Abstandhalter (1), der an seiner einen Seite mittels eines Befestigungsmittels an dem Abdeckbauteil festlegbar ist und der auf seiner gegenüberliegenden Seite mit einem Haftverschlussteil (7) versehen ist, das mit einem korrespondierenden Haftverschlussteil (15) wieder lösbar in Eingriff bringbar ist, das an dem Drittbauteil (17) festlegbar ist, **dadurch gekennzeichnet, dass** sich an zumindest einem Rand der mit dem Abdeckbauteil zu verbindenden Seite des Distanzkörpers (3) ein flaches Gitter (21) anschließt, das den Verbindungsbereich zwischen Abdeckbauteil und Abstandhalter (1) vergrößert und dass das Gitter (21) an dem Distanzkörper (3) einstückig angeformt ist.

2. Befestigungssystem nach Anspruch 1, **dadurch gekennzeichnet, dass** sich das Gitter (21) an sämtliche Ränder des rechteckförmigen Distanzkörpers (3) anschließt.

3. Befestigungssystem nach Anspruch 1 oder 2, **dadurch gekennzeichnet, dass** das Gitter die Fläche des Verbindungsbereichs des Abstandhalters (1) mit dem Abdeckbauteil auf mehr als das Doppelte der Fläche des Distanzkörpers (3) vergrößert.

4. Befestigungssystem nach einem der vorstehenden Ansprüche, **dadurch gekennzeichnet, dass** das Gitter (21) an seinem Umfang eine stetige Krümmung aufweist, insbesondere kreisrund oder oval ist.

5. Befestigungssystem nach einem der vorstehenden Ansprüche, **dadurch gekennzeichnet, dass** das Gitter (21) mehreckig ist.

6. Befestigungssystem nach einem der vorstehenden Ansprüche, **dadurch gekennzeichnet, dass** das mehreckige Gitter (21) nach innen (35) und nach außen geöffnete Eckwinkel (33) aufweist.

7. Befestigungssystem nach einem der vorstehenden Ansprüche, **dadurch gekennzeichnet, dass** der Distanzkörper (3) im Zentralbereich des durch das Gitter (21) gebildeten Verbindungsbereichs gelegen ist.

8. Befestigungssystem nach einem der vorstehenden Ansprüche, **dadurch gekennzeichnet, dass** der Distanzkörper (3) außerhalb des Zentralbereichs des durch das Gitter (21) gebildeten Verbindungsbereichs gelegen ist.

9. Befestigungssystem nach einem der vorstehenden Ansprüche, **dadurch gekennzeichnet, dass** das Gitter (21) durch zwei sich kreuzende Gruppen aus zueinander parallel verlaufenden Gitterstäben (23, 25) gebildet ist.

10. Befestigungssystem nach einem der vorstehenden Ansprüche, **dadurch gekennzeichnet, dass** sich die Gruppen der Gitterstäbe (23, 25) im rechten Winkel kreuzen.

11. Befestigungssystem nach einem der vorstehenden Ansprüche, **dadurch gekennzeichnet, dass** der Distanzkörper (3) an der mit dem Abdeckbauteil zu verbindenden Seite eine vorstehende, ebene Randeinfassung (29) aufweist, an die sich das Gitter (21) koplanar anschließt.

12. Befestigungssystem nach einem der vorstehenden Ansprüche, **dadurch gekennzeichnet, dass** die Trägerlage (9) des ersten Haftverschlussteils (7) an der den Verhakungselementen (11) entgegengesetzten Seite eine vorspringende Haltenase (45) mit einer knopfartigen Erweiterung (47) besitzt, durch die Ränder (50) eines Schlitzes (49) im Kastenteil (41) hintergreifbar sind, das als Hohlkasten in Form eines Troges mit oberhalb der Ebene des Gitters (21) gelegenem Boden (43) und mit einer offenen Seite ausgebildet ist, durch die die Haltenase (45) in den Schlitz (49) einsteckbar ist, der im Boden (43) des Kastenteils (41) gebildet ist.

## Claims

1. A fastening system for detachable mounting of covering components, such as panels, on other components (17) such as automotive body parts (19), with at least one spacer (1) which has a spacer body (3) of differently predefinable design height, which spacer can be secured by means of a fastening means on the covering component on its one side and is provided with a hook-and-loop fastening part (7) on its opposite side, which hook-and-loop fastening part can be detachably engaged with a corresponding hook-and-loop fastening part (15) which can be secured on the other component (17), **characterised in that** a flat mesh (21) which enlarges the connection area between covering component and spacer (1) is connected to at least one edge of the side of the spacer body (3) to be connected to the covering component, and that the mesh (21) is integrally moulded on the spacer body (3) in one piece.

2. The fastening system according to claim 1, **characterised in that** the mesh (21) is connected to all the edges of the rectangular spacer body (3).

3. The fastening system according to claim 1 or 2, **characterised in that** the mesh enlarges the surface of the connection area of the spacer (1) with the covering component to more than twice the area of the spacer body (3).

4. The fastening system according to one of the preceding claims, **characterised in that** the mesh (21) has a smooth curvature on its periphery, and is in particular circular or oval.

5. The fastening system according to one of the preceding claims, **characterised in that** the mesh (21) is polygonal.

6. The fastening system according to one of the preceding claims, **characterised in that** the polygonal mesh (21) has corner angles open toward the inside (35) and toward the outside (33).

7. The fastening system according to one of the preceding claims, **characterised in that** the spacer body (3) is situated in the central area of the connection area formed by the mesh (21).

8. The fastening system according to one of the preceding claims, **characterised in that** the spacer body (3) is situated outside of the central area of the connection area formed by the mesh (21).

9. The fastening system according to one of the preceding claims, **characterised in that** the mesh (21) is formed by two intersecting groups of mesh bars (23, 25) running parallel to one another.

10. The fastening system according to one of the preceding claims, **characterised in that** the groups of mesh bars (23, 25) intersect at right angles.

11. The fastening system according to one of the preceding claims, **characterised in that** the spacer body (3) has a protruding planar edging (29) on the side to be connected to the covering component with the mesh (21) to which the edging connects, in a coplanar arrangement.

12. The fastening system according to one of the preceding claims, **characterised in that** the backing layer (9) of the first hook-and-loop fastening part (7) has a protruding retaining lug (45) with a button type enlargement (47) at the side opposite the hook elements (11), which backing layer can be gripped from behind through the edges (50) of a slot (49) in the box part (41) which is designed as a hollow box in the form of a trough with the bottom (43) situated above the plane of the mesh (21) and with an open side through which the retaining lug (45) can be inserted into the slot (49) formed in the bottom (43) of the box part (41).

## Revendications

1. Système de fixation pour mettre, de manière redétachable, des éléments de recouvrement, comme des panneaux, sur des éléments (17) tiers, comme des parties (19) de carrosserie, comprenant au moins un intercalaire (1), qui a une pièce (3) de mise en distance de hauteur pouvant être donnée à l'avance de façon différente, qui, sur l'une de ses faces, peut être fixée à l'élément de recouvrement au moyen d'une fixation et qui, sur la face opposée, est pourvue d'une partie (7) de fermeture autoagrippante pouvant être mise en prise, de manière redétachable, avec une partie (15) correspondante de fermeture autoagrippante pouvant être fixée sur l'élément (17) tiers, **caractérisé en ce que**, à au moins un bord de la face à relier à l'élément de recouvrement de la pièce (3) de mise à distance, se raccorde une grille (21) plane, qui agrandit la région de liaison entre la pièce de recouvrement et l'intercalaire (1) et **en ce que** la grille (21) plane est formée d'une seule pièce sur la pièce (3) de mise à distance.

2. Système de fixation suivant la revendication 1, **caractérisé en ce que** la grille (21) se raccorde à tous les bords de la pièce (3) rectangulaire de mise à distance.

3. Système de fixation suivant la revendication 1 ou 2, **caractérisé en ce que** la grille agrandit, de plus du double de la surface de la pièce (3) de mise à distance, la surface de la région de liaison de l'intercalaire (1) à l'élément de recouvrement.

4. Système de fixation suivant l'une des revendications précédentes, **caractérisé en ce que** la grille (21) a, sur son pourtour, une courbure continue, en étant notamment circulaire ou ovale.

5. Système de fixation suivant l'une des revendications précédentes, **caractérisé en ce que** la grille (21) est polygonale.

6. Système de fixation suivant l'une des revendications précédentes, **caractérisé en ce que** la grille (21) polygonale a des angles (33) de sommet ouverts vers l'intérieur (35) et vers l'extérieur.

7. Système de fixation suivant l'une des revendications précédentes, **caractérisé en ce que** la pièce (3) de mise à distance est mise dans la région centrale de la région de liaison formée par la grille (21).

8. Système de fixation suivant l'une des revendications précédentes, **caractérisé en ce que** la pièce (3) de mise à distance est mise à l'extérieur de la région centrale de la région de liaison formée par la grille (21).

9. Système de fixation suivant l'une des revendications précédentes, **caractérisé en ce que** la grille (21) est formée par deux groupes entrecroisés de barreaux (23, 25) de grille s'étendant parallèlement entre eux.

10. Système de fixation suivant l'une des revendications précédentes, **caractérisé en ce que** les groupes des barreaux (23, 25) de la grille s'entrecroisent à angle droit.

11. Système de fixation suivant l'une des revendications précédentes, **caractérisé en ce que** la pièce (3) de mise à distance a un encadrement (29) de bord plan, en saillie, sur la face à relier à l'élément de recouvrement, encadrement qui se raccorde de manière coplanaire à la grille (21).

12. Système de fixation suivant l'une des revendications précédentes, **caractérisé en ce que** la couche (9) de support de la première partie (7) de fermeture autoagrippante a, du côté opposé aux éléments (11) d'accrochage, un bec (45)de maintien en saillie, ayant un élargissement (47) de type en tête, par lequel des bords (50) d'une fente (49) peuvent s'accrocher dans la partie (41) formant caisson, qui est constituée en caisson creux sous la forme d'un auget, ayant un fond (43) mis au-dessus du plan de la grille (21), et un côté ouvert par lequel le bec (45) de maintien peut être enfiché dans la fente (49) formée au fond (43) de la partie (41) formant caisson.
